# EUROPEAN PATENT SPECIFICATION

(11) **EP 3 349 395 B1**
(45) Date of publication and mention of the grant of the patent: **10.03.2021**
(21) Application number: 18150467.1
(22) Date of filing: 05.01.2018
(51) Int. Cl.: H04L 12/18

(54) **PREDICTING A USER EXPERIENCE METRIC FOR AN ONLINE CONFERENCE USING NETWORK ANALYTICS**
VORHERSAGE EINER BENUTZERERFAHRUNGSMETRIK FÜR EINE ONLINE-KONFERENZ UNTER VERWENDUNG VON NETZWERKANALYTIK
PRÉVISION D'UNE MESURE D'EXPÉRIENCE D'UTILISATEUR POUR UNE CONFÉRENCE EN LIGNE À L'AIDE D'UNE ANALYSE DE RÉSEAU

(30) Priority: 13.01.2017 US 201715405455
(43) Date of publication of application: 18.07.2018
(73) Proprietor: Cisco Technology, Inc., San Jose, CA 95134 (US)
(72) Inventor: VASSEUR, Jean-Phillippe, 38410 Saint Martin D'uriage (FR); MERMOUD, Grégory, 3968 Veyras (CH); SAVALLE, Pierre-André, 92500 Rueil-Malmaison (FR); MOTA, Javier Cruz, 1042 Assens (CH)
(74) Representative: Clark, Jane Anne

(56) References cited:
- EP-A1- 3 001 604
- US-A1- 2012 246 212
- US-A1- 2014 071 980
- US-A1- 2016 006 574
- US-A1- 2016 026 922

## Description

### TECHNICAL FIELD

The present disclosure relates generally to computer networks, and, more particularly, to predicting a user experience metric for an online conference using network analytics.

### BACKGROUND

Various forms of online conferencing options now exist in a communication network. In some cases, an online conference may be an audio conference using, e.g., Voice over Internet Protocol (VoIP) or the like. In other cases, an online conference may be a video conference in which one or more participants of the conference stream video data to the other participants (e.g., to allow the other participants to see the presenter, to allow the sharing of documents, etc.). Typically, video conferencing of this sort also supports audio streaming.

In general, network traffic for an online conference is more sensitive to networking problems than other forms of traffic. For example, a slight delay of a few seconds in loading a webpage may be almost unperceivable to a user. In contrast, a delay of only a fraction of a second in an audio stream may still be perceivable to a user.

To ensure a minimum threshold of network performance, one mechanism is the enactment of a Service Level Agreement (SLA) that can be applied to sensitive traffic such as conferencing traffic, industrial traffic, etc. Accordingly, various control plane mechanism have been developed such as Resource Reservation Protocol (RSVP) signaling, Video/Voice Call Admission Control (CAC), Multi-Topology Routing (MTR), Traffic Engineering (TE) mechanism, Quality of Service (QoS) mechanisms (e.g., traffic marking, shaping, queueing, etc.), and the like.

US 2016/026922 discloses a management system that determines respective capability information of machine learning systems, the capability information including at least an action the respective machine learning system is configured to perform. US 2012/246212 discloses a gateway that implements: detecting that a mobile device using a communication session in a mobile network is associated with a mobile videoconferencing application, where the videoconferencing application is capable of sending and receiving media streams; and providing from the mobile network to a videoconferencing system within a fixed network a first set of indicators associated with the communication session, and performing policy control.

Aspects and examples of the present invention are set out in the appended claims. In particular, the invention is defined by a method according to the features of claim 1, an apparatus according to the features of claim 10 and a computer program product according to the features of claim 11.

### BRIEF DESCRIPTION OF THE DRAWINGS

The embodiments herein may be better understood by referring to the following description in conjunction with the accompanying drawings in which like reference numerals indicate identically or functionally similar elements, of which:
FIGS. 1A-1B illustrate an example communication network;
FIG. 2 illustrates an example network device/node;
FIG. 3 illustrates an example architecture for predicting a user experience metric for a connection to an online conference;
FIGS. 4A-4B illustrate examples of centralized and distributed approaches to predicting user experience metrics for a connection to an online conference; and
FIG. 5 illustrates an example simplified procedure for causing an endpoint node to use a different connection to an online conference based on a predicted experience metric.

### DESCRIPTION OF EXAMPLE EMBODIMENTS

### Overview

According to one or more embodiments of the disclosure, a device in a network receives an indication of a connection between an endpoint node in the network and a conferencing service. The device retrieves network data associated with the indicated connection between the endpoint node and the conferencing service. The device uses a machine learning model to predict an experience metric for the endpoint node based on the network data associated with the indicated connection between the endpoint node and the conferencing service. The device causes the endpoint node to use a different connection to the conferencing service based on the predicted experience metric.

### Description

A computer network is a geographically distributed collection of nodes interconnected by communication links and segments for transporting data between end nodes, such as personal computers and workstations, or other devices, such as sensors, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), or synchronous digital hierarchy (SDH) links, or Powerline Communications (PLC) such as IEEE 61334, IEEE P1901.2, and others. The Internet is an example of a WAN that connects disparate networks throughout the world, providing global communication between nodes on various networks. The nodes typically communicate over the network by exchanging discrete frames or packets of data according to predefined protocols, such as the Transmission Control Protocol/Internet Protocol (TCP/IP). In this context, a protocol consists of a set of rules defining how the nodes interact with each other. Computer networks may be further interconnected by an intermediate network node, such as a router, to extend the effective "size" of each network.

Smart object networks, such as sensor networks, in particular, are a specific type of network having spatially distributed autonomous devices such as sensors, actuators, etc., that cooperatively monitor physical or environmental conditions at different locations, such as, e.g., energy/power consumption, resource consumption (e.g., water/gas/etc. for advanced metering infrastructure or "AMI" applications) temperature, pressure, vibration, sound, radiation, motion, pollutants, etc. Other types of smart objects include actuators, e.g., responsible for turning on/off an engine or perform any other actions. Sensor networks, a type of smart object network, are typically shared-media networks, such as wireless or PLC networks. That is, in addition to one or more sensors, each sensor device (node) in a sensor network may generally be equipped with a radio transceiver or other communication port such as PLC, a microcontroller, and an energy source, such as a battery. Often, smart object networks are considered field area networks (FANs), neighborhood area networks (NANs), personal area networks (PANs), etc. Generally, size and cost constraints on smart object nodes (e.g., sensors) result in corresponding constraints on resources such as energy, memory, computational speed and bandwidth.

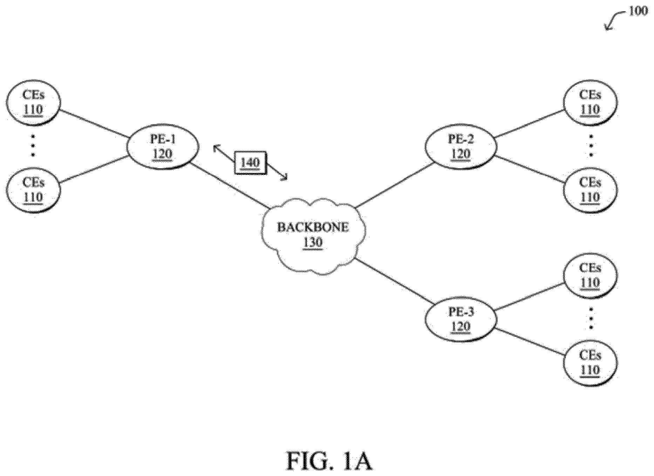

FIG. 1A is a schematic block diagram of an example computer network 100 illustratively comprising nodes/devices, such as a plurality of routers/devices interconnected by links or networks, as shown. For example, customer edge (CE) routers 110 may be interconnected with provider edge (PE) routers 120 (e.g., PE-1, PE-2, and PE-3) in order to communicate across a core network, such as an illustrative network backbone 130. For example, routers 110, 120 may be interconnected by the public Internet, a multiprotocol label switching (MPLS) virtual private network (VPN), or the like. Data packets 140 (e.g., traffic/messages) may be exchanged among the nodes/devices of the computer network 100 over links using predefined network communication protocols such as the Transmission Control Protocol/Internet Protocol (TCP/IP), User Datagram Protocol (UDP), Asynchronous Transfer Mode (ATM) protocol, Frame Relay protocol, or any other suitable protocol. Those skilled in the art will understand that any number of nodes, devices, links, etc. may be used in the computer network, and that the view shown herein is for simplicity.

In some implementations, a router or a set of routers may be connected to a private network (e.g., dedicated leased lines, an optical network, etc.) or a virtual private network (VPN), such as an MPLS VPN thanks to a carrier network, via one or more links exhibiting very different network and service level agreement characteristics. For the sake of illustration, a given customer site may fall under any of the following categories:
1.) Site Type A: a site connected to the network (e.g., via a private or VPN link) using a single CE router and a single link, with potentially a backup link (e.g., a 3G/4G/LTE backup connection). For example, a particular CE router 110 shown in network 100 may support a given customer site, potentially also with a backup link, such as a wireless connection.
2.) Site Type B: a site connected to the network using two MPLS VPN links (e.g., from different Service Providers), with potentially a backup link (e.g., a 3G/4G/LTE connection). A site of type B may itself be of different types:
2a.) Site Type B1: a site connected to the network using two MPLS VPN links (e.g., from different Service Providers), with potentially a backup link (e.g., a 3G/4G/LTE connection).
2b.) Site Type B2: a site connected to the network using one MPLS VPN link and one link connected to the public Internet, with potentially a backup link (e.g., a 3G/4G/LTE connection). For example, a particular customer site may be connected to network 100 via PE-3 and via a separate Internet connection, potentially also with a wireless backup link.
2c.) Site Type B3: a site connected to the network using two links connected to the public Internet, with potentially a backup link (e.g., a 3G/4G/LTE connection).
   Notably, MPLS VPN links are usually tied to a committed service level agreement, whereas Internet links may either have no service level agreement at all or a loose service level agreement (e.g., a "Gold Package" Internet service connection that guarantees a certain level of performance to a customer site).
3.) Site Type C: a site of type B (e.g., types B1, B2 or B3) but with more than one CE router (e.g., a first CE router connected to one link while a second CE router is connected to the other link), and potentially a backup link (e.g., a wireless 3G/4G/LTE backup link). For example, a particular customer site may include a first CE router 110 connected to PE-2 and a second CE router 110 connected to PE-3.

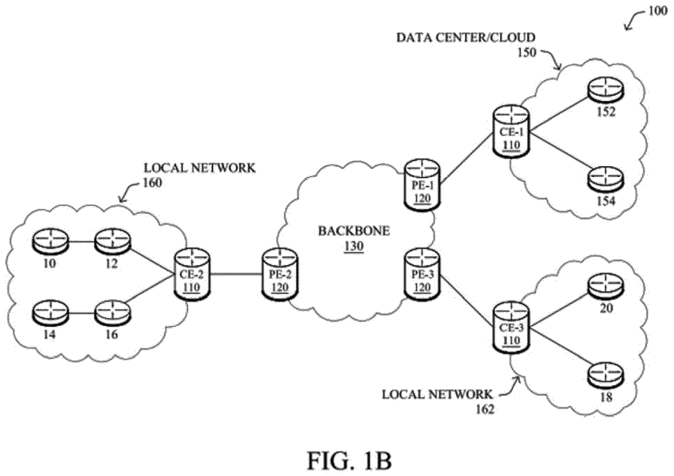

FIG. 1B illustrates an example of network 100 in greater detail, according to various embodiments. As shown, network backbone 130 may provide connectivity between devices located in different geographical areas and/or different types of local networks. For example, network 100 may comprise local/branch networks 160, 162 that include devices/nodes 10-16 and devices/nodes 18-20, respectively, as well as a data center/cloud environment 150 that includes servers 152-154. Notably, local networks 160-162 and data center/cloud environment 150 may be located in different geographic locations.

Servers 152-154 may include, in various embodiments, a network management system (NMS), a dynamic host configuration protocol (DHCP) server, a constrained application protocol (CoAP) server, an outage management system (OMS), an application policy infrastructure controller (APIC), an application server, etc. As would be appreciated, network 100 may include any number of local networks, data centers, cloud environments, devices/nodes, servers, etc.

In some embodiments, the techniques herein may be applied to other network topologies and configurations. For example, the techniques herein may be applied to peering points with high-speed links, data centers, etc.

In various embodiments, network 100 may include one or more mesh networks, such as an Internet of Things network. Loosely, the term "Internet of Things" or "IoT" refers to uniquely identifiable objects (things) and their virtual representations in a network-based architecture. In particular, the next frontier in the evolution of the Internet is the ability to connect more than just computers and communications devices, but rather the ability to connect "objects" in general, such as lights, appliances, vehicles, heating, ventilating, and air-conditioning (HVAC), windows and window shades and blinds, doors, locks, etc. The "Internet of Things" thus generally refers to the interconnection of objects (e.g., smart objects), such as sensors and actuators, over a computer network (e.g., via IP), which may be the public Internet or a private network.

Notably, shared-media mesh networks, such as wireless or PLC networks, etc., are often on what is referred to as Low-Power and Lossy Networks (LLNs), which are a class of network in which both the routers and their interconnect are constrained: LLN routers typically operate with constraints, e.g., processing power, memory, and/or energy (battery), and their interconnects are characterized by, illustratively, high loss rates, low data rates, and/or instability. LLNs are comprised of anything from a few dozen to thousands or even millions of LLN routers, and support point-to-point traffic (between devices inside the LLN), point-to-multipoint traffic (from a central control point such at the root node to a subset of devices inside the LLN), and multipoint-to-point traffic (from devices inside the LLN towards a central control point). Often, an IoT network is implemented with an LLN-like architecture. For example, as shown, local network 160 may be an LLN in which CE-2 operates as a root node for nodes/devices 10-16 in the local mesh, in some embodiments.

In contrast to traditional networks, LLNs face a number of communication challenges. First, LLNs communicate over a physical medium that is strongly affected by environmental conditions that change over time. Some examples include temporal changes in interference (e.g., other wireless networks or electrical appliances), physical obstructions (e.g., doors opening/closing, seasonal changes such as the foliage density of trees, etc.), and propagation characteristics of the physical media (e.g., temperature or humidity changes, etc.). The time scales of such temporal changes can range between milliseconds (e.g., transmissions from other transceivers) to months (e.g., seasonal changes of an outdoor environment). In addition, LLN devices typically use low-cost and low-power designs that limit the capabilities of their transceivers. In particular, LLN transceivers typically provide low throughput. Furthermore, LLN transceivers typically support limited link margin, making the effects of interference and environmental changes visible to link and network protocols. The high number of nodes in LLNs in comparison to traditional networks also makes routing, quality of service (QoS), security, network management, and traffic engineering extremely challenging, to mention a few.

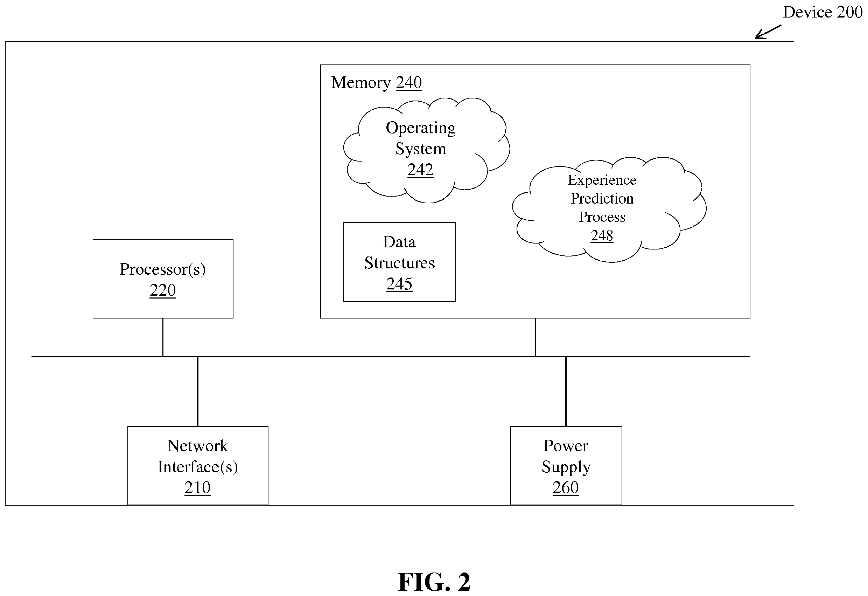

FIG. 2 is a schematic block diagram of an example node/device 200 that may be used with one or more embodiments described herein, e.g., as any of the computing devices shown in FIGS. 1A-1B, particularly the PE routers 120, CE routers 110, nodes/device 10-20, servers 152-154 (e.g., a network controller located in a data center, etc.), any other computing device that supports the operations of network 100 (e.g., switches, etc.), or any of the other devices referenced below. The device 200 may also be any other suitable type of device depending upon the type of network architecture in place, such as IoT nodes, etc. Device 200 comprises one or more network interfaces 210, one or more processors 220, and a memory 240 interconnected by a system bus 250, and is powered by a power supply 260.

The network interfaces 210 include the mechanical, electrical, and signaling circuitry for communicating data over physical links coupled to the network 100. The network interfaces may be configured to transmit and/or receive data using a variety of different communication protocols. Notably, a physical network interface 210 may also be used to implement one or more virtual network interfaces, such as for virtual private network (VPN) access, known to those skilled in the art.

The memory 240 comprises a plurality of storage locations that are addressable by the processor(s) 220 and the network interfaces 210 for storing software programs and data structures associated with the embodiments described herein. The processor 220 may comprise necessary elements or logic adapted to execute the software programs and manipulate the data structures 245. An operating system 242 (e.g., the Internetworking Operating System, or IOS®, of Cisco Systems, Inc., another operating system, etc.), portions of which are typically resident in memory 240 and executed by the processor(s), functionally organizes the node by, inter alia, invoking network operations in support of software processors and/or services executing on the device. These software processors and/or services may comprise routing process 244 (e.g., routing services) and illustratively, an experience prediction process 248, as described herein, any of which may alternatively be located within individual network interfaces.

It will be apparent to those skilled in the art that other processor and memory types, including various computer-readable media, may be used to store and execute program instructions pertaining to the techniques described herein. Also, while the description illustrates various processes, it is expressly contemplated that various processes may be embodied as modules configured to operate in accordance with the techniques herein (e.g., according to the functionality of a similar process). Further, while processes may be shown and/or described separately, those skilled in the art will appreciate that processes may be routines or modules within other processes.

Experience prediction process 248 includes computer executable instructions that, when executed by processor(s) 220, cause device 200 to predict a user experience metric as part of an online conferencing infrastructure within the network. According to various embodiments, experience prediction process 248 may employ any number of machine learning techniques, to assess a given traffic flow in the network. In general, machine learning is concerned with the design and the development of techniques that receive empirical data as input (e.g., data regarding the performance/characteristics of the network) and recognize complex patterns in the input data. For example, some machine learning techniques use an underlying model M, whose parameters are optimized for minimizing the cost function associated to M, given the input data. For instance, in the context of classification, the model M may be a straight line that separates the data into two classes (e.g., labels) such that M = a^{∗}x + b^{∗}y + c and the cost function is a function of the number of misclassified points. The learning process then operates by adjusting the parameters a,b,c such that the number of misclassified points is minimal. After this optimization/learning phase, experience prediction process 248 can use the model M to classify new data points, such as information regarding the network performance/characteristics associated with a new connection to a conferencing service. Often, M is a statistical model, and the cost function is inversely proportional to the likelihood of M, given the input data.

In various embodiments, experience prediction process 248may employ one or more supervised, unsupervised, or semi-supervised machine learning models to analyze traffic flow data. Generally, supervised learning entails the use of a training dataset, which is used to train the model to apply labels to the input data. For example, the training data may include sample network data that may be labeled simply as representative of a "good conference connection" or a "bad conference connection." On the other end of the spectrum are unsupervised techniques that do not require a training set of labels. Notably, while a supervised learning model may look for previously seen network data that has been labeled accordingly, an unsupervised model may instead look to whether there are sudden changes in the performance of the network. Semi-supervised learning models take a middle ground approach that uses a greatly reduced set of labeled training data.

Example machine learning techniques that traffic flow analyzer process 248 can employ may include, but are not limited to, nearest neighbor (NN) techniques (e.g., k-NN models, replicator NN models, etc.), statistical techniques (e.g., Bayesian networks, etc.), clustering techniques (e.g., k-means, mean-shift, etc.), neural networks (e.g., reservoir networks, artificial neural networks, etc.), support vector machines (SVMs), logistic or other regression, Markov models or chains, principal component analysis (PCA) (e.g., for linear models), multi-layer perceptron (MLP) ANNs (e.g., for non-linear models), replicating reservoir networks (e.g., for non-linear models, typically for time series), random forest classification, or the like.

The performance of a machine learning model can be evaluated in a number of ways based on the number of true positives, false positives, true negatives, and/or false negatives of the model. For example, the false positives of the model may refer to the number of times the model incorrectly labeled a conferencing connection as bad. Conversely, the false negatives of the model may refer to the number of connections that the model labels as 'good,' but are, in fact, of poor quality to the users. True negatives and positives may refer to the number of times the model correctly classifies a connection as good or bad, respectively. Related to these measurements are the concepts of recall and precision. Generally, recall refers to the ratio of true positives to the sum of true positives and false negatives, which quantifies the sensitivity of the model. Similarly, precision refers to the ratio of true positives the sum of true and false positives.

As noted above, various networking mechanisms are available to enforce one or more Service Level Agreements (SLAs) with respect to a connection to a conferencing service such as, but not limited to, Resource Reservation Protocol (RSVP) signaling, Video/Voice Call Admission Control (CAC), Multi-Topology Routing (MTR), Traffic Engineering (TE) mechanism, Quality of Service (QoS) mechanisms (e.g., traffic marking, shaping, queueing, etc.), and the like. However, the fundamental challenges still remain with respect to: 1.) determining the SLA requirements of the application and 2.) identifying the real quality of service (QoS) provided by the network to the application, particularly from the standpoint of the user (e.g., a measure of the "user experience").

One of the most common metrics used to determine voice quality, as perceived by a user, is the Mean Opinionated Score (MOS), a scalar that ranges between 1 and 5, with 5 representing perfect call quality. Similarly, subjective video quality approaches have been proposed to evaluate the quality of videos (e.g., picture quality, audio quality, lip sync, etc.) and other metrics such as the Peak Signal-to-noise ratio (PSNR) and Mean Squared Error (MSE). However, despite the plethora of quality metrics proposed thus far, application experience rankings provided by the end user are the only undisputable ground truth for measuring the user experience.

### Predicting a User Experience Metric for an Online Conference using Network Analytics

The techniques herein introduce a machine learning-based approach for predicting the quality of a conferencing connection (e.g., voice, video, voice and video, etc.) based on retrieved network information and ranking feedback from actual users. Notably, the system may receive ranking information (e.g., 1-5 stars, etc.) supplied by actual users to a conferencing service (e.g., WebEx™, Spark™, etc.), as well as network-centric metrics (e.g., from the corresponding access points, network controllers, path devices, etc.). In turn, the received information can be used to train a prediction model that outputs a predicted user experience metric based on the network information associated with a particular connection to the conferencing service. In some aspects, this predicted experience metric can be provided to the endpoint node using signaling (e.g., 802.11k/v for wireless, etc.), to cause the endpoint node to take the appropriate action, such as by (re)routing the call/video to potentially an alternate path (e.g., using a 4G network connection).

Specifically, according to one or more embodiments of the disclosure as described in detail below, a device in a network receives an indication of a connection between an endpoint node in the network and a conferencing service. The device retrieves network data associated with the indicated connection between the endpoint node and the conferencing service. The device uses a machine learning model to predict an experience metric for the endpoint node based on the network data associated with the indicated connection between the endpoint node and the conferencing service. The device causes the endpoint node to use a different connection to the conferencing service based on the predicted experience metric.

Illustratively, the techniques described herein may be performed by hardware, software, and/or firmware, such as in accordance with the experience prediction process 248, which may include computer executable instructions executed by the processor 220 (or independent processor of interfaces 210) to perform functions relating to the techniques described herein.

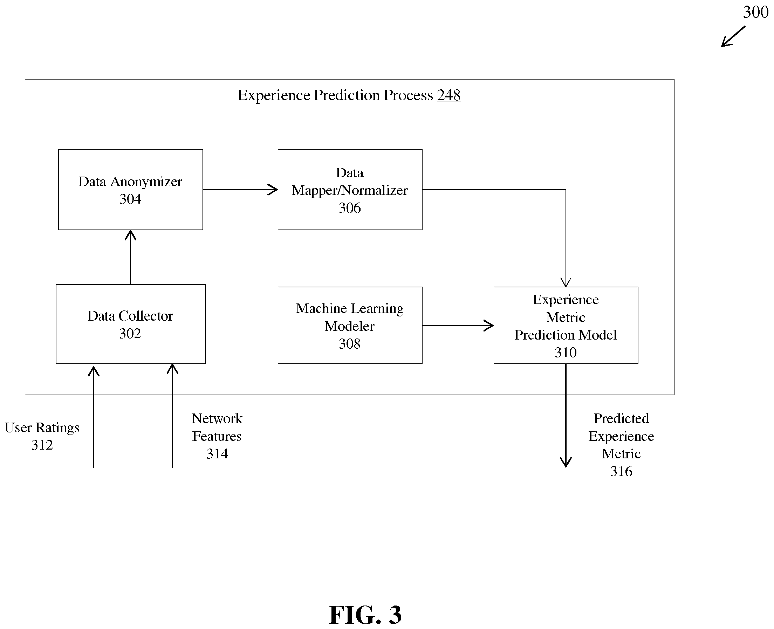

Operationally, FIG. 3 illustrates an example architecture 300 for predicting a user experience metric for a connection to an online conference, according to various embodiments. As shown, experience prediction process 248 may include any number of sub-processes 302-310 to perform their respective functions described herein. As would be appreciated, sub-processes 302-310 may be implemented on a single device (e.g., a device 200 executing experience prediction process 248) or in a distributed manner across multiple devices (in which case the executing devices in combination can be viewed as a separate device in and of itself). For example, in some embodiments, experience prediction process 248 may be implemented as a cloud-based service provided by any number of physical devices. Further, while the functions of sub-processes 302-310 are described separately, the functions of sub-processes 302-310 may be combined, added, or removed, as desired, when implementing the techniques herein.

As shown, experience prediction process 248 may include a data collector 302 that is operable to gather or otherwise receive both user ratings 312 and network features 314 regarding connections to a conferencing service in the network. In some embodiments, data collector 302 may receive user ratings 312 and/or network features 314 on a pull basis (e.g., in response to sending a request for the data). In further embodiments, data collector 302 may receive user ratings 312 and/or network features 314 on a push basis (e.g., without sending a specific request), such as by subscribing to a data feed.

In various embodiments, data collector 302 may receive user ratings 312 via a data feed with the user rating engine. Such an engine may, for example, be part of the conferencing service. In this respect, example conferencing services may include, but are not limited to, Spark™ by Cisco Systems, Inc., Lync™ by Microsoft Corp., WebEx by Cisco Systems, Inc., or any other audio and/or video conferencing service. To do so, data collector 302 may employ the use of a custom application program interface (API) with the conferencing service, to receive the user ratings 312 provided by actual users of the service. For example, as users rate their call experiences in the host application, such labels (e.g., from 1 to 5 stars) with timestamps can be provided to data collector 302 as part of user ratings 312. Note that in another embodiment, the rating labels in user ratings 312 may not be a range of integers (e.g., on a 1-5 scale, on a 1-10 scale, etc.) but may be of any other form that quantifies the user's sentiment towards their connection to the conference. For example, in some cases, data collector 302 may derive the underlying sentiment from natural language included in user ratings 312 or the like.

In addition to receiving user ratings 312 from the conferencing service, data collector 302 may also receive any number of network features 314 associated with the conference connections to which user ratings 312 refer. Data collector 302 may form such associations between user ratings 312 and network features 314 in any number of different ways. The first, and potentially simplest, case is when the identity of the access point for the ranked conference connection is provided by the conferencing application service itself, such as the Basic Service Set Identifier (BSSID) of the access point used by the endpoint node for the connection. In turn, data collector 302 may retrieve the network features 314 associated with the access point and also potentially based on the timestamp included in the corresponding user rating 312.

In various embodiments, data collector 302 may gather network features 314 based on user ratings 312 by performing any or all of the following:
1. using Simple Network Management Protocol (SNMP) version 3 (SNMPv3) or another similar protocol to poll the data from the access point;
2. communicating with a network management system (e.g., Cisco Prime™, etc.);
3. communicating with a network management data analytics platform; and/or
4. using an API (e.g., a REST-based API, etc.) or push-based service to obtain data at regular intervals from the Wireless Controllers (WLC) associated with the identified access point.

In the case of an endpoint node that does not identify the identity of the access point to which it is connected, data collector 302 may instead use 802.1x or a similar mechanism to first identify the endpoint node itself. In turn, data collector 302 may then leverage the identity of the endpoint node to determine the identity of its corresponding access point by communicating with the network access controller, such as the Identity Services Engine™ (ISE) from Cisco Systems, Inc., or the like.

In some embodiments, data anonymizer 304 may anonymize the data received by data collector 302. For example, data anonymizer 304 may remove or encode any sensitive information received by data collector 302, such as personally-identifiable information from user ratings 312, the specific network addresses or device information associated with network features 314, or the like. As would be appreciated, data anonymizer 304 may be configured to anonymize the data from data collector 302 to comply with any applicable privacy laws or policies, as desired.

Once the user ratings 312 and network features 314 have been anonymized by data anonymizer 304, data mapper/normalizer 306 may process the resulting data to map network features 314 to their corresponding user ratings 312. Note that, in general, experience prediction process 248 predicts an experience metric for a given connection to the conferencing service as a function of the network features themselves. In further cases, data mapper/normalizer 306 may also map or otherwise associate data regarding different connections made to the same conference. For example, data mapper/normalizer 306 may associate a particular user rating 312 with both the network features 314 from the networking devices associated with the user's connection (e.g., the access point, WLC, etc. that the user is on), as well as the network features 314 from the networking devices associated with the other participant(s)' connections, if available. Notably, if one user down-rates the conference, it may be due to networking issues experienced by another participant and have little to do with the user's own connection.

The following network features 314 were used to construct a prototype using the techniques herein:
- **Access Point (AP) Level Metrics:** this includes both static characteristics such as detailed access point configuration or model information, semi-dynamic characteristics such as active channels, or fully dynamic metrics such as the number of connected client, throughput metrics, radio, noise and interference metrics. Depending on capabilities of the wireless access point, this can also include more advanced radio metrics such as retransmission counters, or access point localization information.
- **Wireless LAN Controller (WLC) Level Metrics:** this includes load metrics (e.g., number of access points managed, CPU, memory, internal data structures etc.), as well as static characteristics, such as configuration.
- **DHCP Level Metrics:** this includes any counter or metric collected from the pool of DHCP servers used in the network (e.g., message counters or roundtrip time measurements).
- **Remote Authentication Dial-In User Service (Radius) Level Metrics:** similarly to DHCP, this includes any counter or metric collected from the Radius servers used for authentication or accounting.
- **Client Level Metrics:** this can include characteristics ranging from device type to radio characteristics for the client as seen from access points in the network, observed throughput or roaming patterns. Note that all of these client-related metrics are all from the point of view of the networking itself, and that no specific interaction with the client is required to collect this data.
- **Network Path Cost Metrics:** this can include information provided by network elements or path computation elements as to the costs of paths in the network between access points, WLCs, and relevant VoIP services.

Using the mapped user ratings 312 and network features 314from data mapper/normalizer, machine learning modeler 308 may construct a training dataset and train machine learning-based, experience metric prediction model 310. For example, machine learning modeler 308 may treat user ratings 312 as labels for their mapped sets of network features 314 in the training dataset used to train experience metric prediction model 310. Generally, experience metric prediction model 310 is operable to take as input a set of network features 314 for a particular connection to the conferencing service and output a predicted experience metric 316 (e.g., a predicted user rating 312 for the connection under analysis).

In one embodiment, experience metric prediction model 310 may be a regression-based model used to predict the corresponding label, such as an integer between 1-5, 1-10, etc. Although such an approach provides more granularity to the network operator, it may be of little relevance to the end user in the context of the techniques herein to predict an integer or continuous rank.

In another embodiment, experience metric prediction model 310 may be a machine learning-based classifier. For example, such a classifier may be a 2-class/binary classifier that is trained with two classes: 1.) "Good Connection" (e.g., with a predicted label ≥ k) and 2.) "Bad Connection" (e.g., with a predicted label < k), where k is a specific threshold on an integer scale (e.g., a 1-5 scale, 1-10 scale, etc.). Other approaches may also allow for providing a predicted class along with its confidence interval.

In a further embodiment, experience metric prediction model 310 may instead include special structured machine learning models that take into accounts conferences for which multiple participating users have provided ratings 312, in order to produce consistent models and avoid confounding variables. In particular, a conference may be rated poorly by a user U if another participant had connectivity issue, in which case no rerouting on the side of user U could alleviate this condition.

A further aspect of the techniques herein relates to the signaling of the predicted experience metric 316 to the corresponding endpoint node. In some embodiments, experience prediction process 248 may include predicted experience metric 316 via a custom type-length-value (TLV) of an 802.11k/v message, to signal the voice/video quality prediction back to the node. In turn, the endpoint node may use predicted experience metric 316 to potentially select a different connection for the conference, such as via a different media (e.g., switching to using 4G to connect to the conference, etc.).

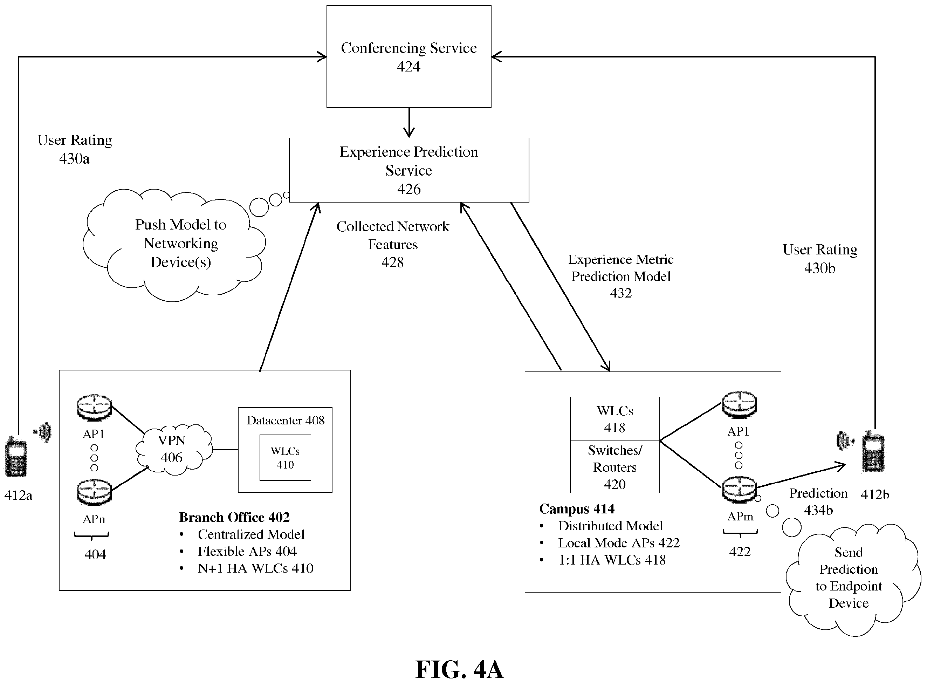

FIGS. 4A-4B illustrate examples of centralized and distributed approaches to predicting user experience metrics for a connection to an online conference, according to various embodiments. Generally, as shown, an endpoint device 412 may connect to a conferencing service 424 via a local network connection. Such a local network may be, for example, a branch office 402 that uses a centralized model or a campus 414 that uses a distributed model. In either case, the endpoint devices 412 may provide user ratings 430 to the application/conferencing service 424 which may be cloud-based, in some embodiments.

Also as shown, an experience prediction service 426 (e.g., executing experience prediction process 248) may be in communication with conferencing service 424, as well as the local networks of branch office 402 and/or campus 414. For example, experience prediction service 426 may receive user ratings 430 supplied by the users of endpoint nodes 412 via an API of conferencing service 424. Likewise, experience prediction service 426 may be in communication with the networking devices in branch office 402 and/or campus 414 directly or indirectly (e.g., a network management server, etc.), to retrieve the network feature data 428 associated with user ratings 430.

The network of branch office 402 may include any number of wireless access points 404 (e.g., a first access point API through nth access point, APn) through which a first endpoint node 412 may connect. Access points 404 may, in turn, be in communication with any number of WLCs 410 located in a centralized datacenter 408. For example, access points 404 may communicate with WLCs 410 via a VPN 406 and experience prediction service 426 may, in turn, communicate with the devices in datacenter 408 to retrieve the corresponding network feature data from access points 404, WLCs 410, etc. In such a centralized model, access points 404 may be flexible access points and WLCs 410 may be N+1 high availability (HA) WLCs, by way of example.

Conversely, the local network of campus 414 may instead use any number of access points 422 (e.g., a first access point API through nth access point APm) that provide connectivity to endpoint node 412b, in a decentralized manner. Notably, instead of maintaining a centralized datacenter, access points 422 may instead be connected to distributed WLCs 418 and switches/routers 420. For example, WLCs 418 may be 1:1 HA WLCs and access points 422 may be local mode access points, in some implementations.

In various embodiments, as shown in FIG. 4A, in the case of a distributed mode, experience prediction service 426 may push experience metric prediction model 432 to the edge of the premises (e.g., the edge of campus 414). For example, a WLC 418, switch/router 420, or access point 422 may execute experience metric prediction model 432 directly, to locally collect network features 428 from the devices in campus 414 and send a predicted experience metric 434b to endpoint node 412b for the connection between endpoint node 412b and conferencing service 424. In some cases, experience prediction service 426 may send model 432 to the executing device at predefined intervals (e.g., using a time-based trigger, in response to detecting a major change in the network or infrastructure that could lead to better classification results, etc.). For example, in response to detecting a new VoIP call from endpoint node 412b using conferencing service 424, the local prediction model 432 may predict the voice user experience quality (e.g., based on the corresponding network features from the networking devices used for the conference in the local network and/or using features collected by service 426). For example, in the case of a binary classifier, the executing access point may indicate to endpoint node 412b the likelihood of the call being good or bad, potentially also with a confidence interval. In turn, endpoint node 412b may decide to connect to the conference using another access point 422 or other media entirely (e.g., by switching to 4G, etc.).

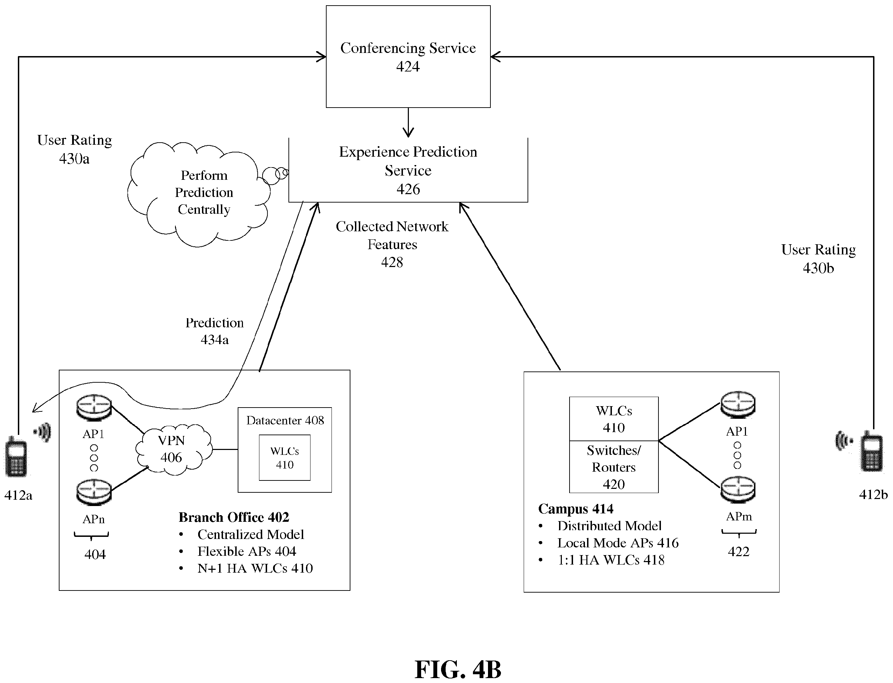

As shown in FIG. 4B, in the centralized mode of operation, experience prediction service 426 may instead perform the predictions (e.g., as part of a cloud-based service). In other words, in some cases, service 426 may not push the prediction model to the edges, which also allows for the techniques herein to be compatible with networking devices that are not capable of hosting the model (e.g., devices that are not compliant with software-defined networking, fog computing, etc.).

In the centralized case, when the access point 404 or WLC 410 connected to endpoint node 412a detects a new connection with conferencing service 424, it may send a custom control plane packet to experience prediction service 426 indicative of the connection, which may be an active connection or one being scheduled. Such an indication may be triggered on a per conference basis or by "batches" (where there is at least N-number of ongoing call/video events). The corresponding network features 428 are also collected by experience prediction service 426 and used to generate and send prediction 434a to the endpoint node 412a. For example, access point 404 may include prediction 434a in a TLV of an 802.11k or 802.11v message to endpoint node 412a. In turn, endpoint node 412a may use prediction 434a to initiate a connection change, if the predicted experience metric indicates poor quality.

FIG. 4 illustrates an example simplified procedure for causing an endpoint node to use a different connection to an online conference based on a predicted experience metric, in accordance with one or more embodiments described herein. For example, a non-generic, specifically configured device (e.g., device 200) may perform procedure 500 by executing stored instructions (e.g., process 248). The procedure 500 may start at step 505, and continues to step 510, where, as described in greater detail above, the device may receive an indication of a connection between an endpoint node in the network and a conferencing service. The conferencing service may provide audio, video, or both audio and video conferencing, in a centralized or decentralized manner, according to various embodiments. For example, in some cases, an access point, WLC, or other networking element associated with the connection may send an indication of the connection to the device.

At step 515, as detailed above, the device may retrieve network data associated with the indicated connection. Generally, the network data may any form of metrics, measurements, statistics, or other characteristics associated with the networking elements involved in the conference (e.g., between the endpoint node and the conferencing service, between the conferencing service and any other endpoints, etc.). For example, in some cases, the networking data may comprise data from a wireless access point, data from a wireless local area network (LAN) controller, Dynamic Host Configuration Protocol (DHCP) data, Remote Authentication Dial-In User Service (RADIUS) data, data regarding the endpoint node, and data regarding a network path used by the indicated connection. For example, the device may send an SNMPv3 message to a wireless access point associated with the connection, use an API to receive data from a WLC associated with the connection, communicate with an NMS, communicate with a network management data analytics platform, or the like.

At step 520, the device may use a machine learning-based model to predict an experience metric for the indicated connection based on the network data from step 515, as described in greater detail above. In various cases, the model may be trained using any number of user-specified experience ratings (e.g., via the conferencing service) and the corresponding network data for the connections. For example, one training sample may associate a user's experience rating (e.g., on a scale of 1-5, etc.) with the corresponding network metrics from the networking elements involved in the conference (e.g., the access point used by the user, etc.). In various cases, the model may be a regression model, classifier model, or the like that is able to generate a predicted experience metric based on the networking data from step 515 (e.g., a predicted experience metric for the connection indicated in step 510). As would be appreciated, this metric may be based solely on data from the networking infrastructure itself and not require any explicit data from the endpoint node.

At step 525, as detailed above, the device may cause the endpoint node to use a different connection to the conferencing service based on the predicted experience metric. For example, if the predicted experience metric for the indicated connection predicts a low quality experience, the endpoint node may opt to use a different network connection to the conference, instead. Procedure 500 then ends at step 530.

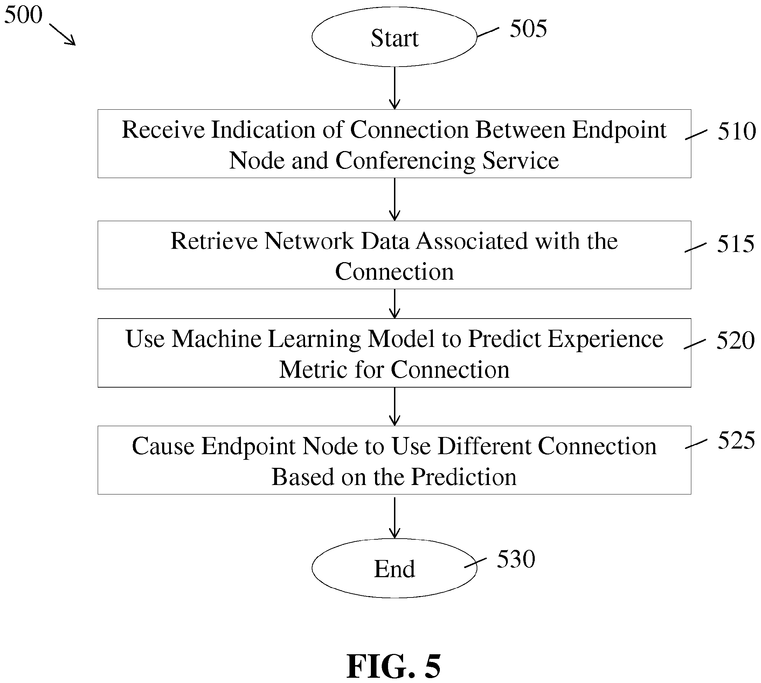

It should be noted that while certain steps within procedure 500 may be optional as described above, the steps shown in FIG. 5 are merely examples for illustration, and certain other steps may be included or excluded as desired. Further, while a particular order of the steps is shown, this ordering is merely illustrative, and any suitable arrangement of the steps may be utilized without departing from the scope of the embodiments herein.

The techniques described herein, therefore, provide a proactive approach to ensuring a high user experience during an online conference. Notably, the techniques herein can be used to signal the predicted experience metric to the connecting node, thereby allowing the node to select the best media for an improved user experience.

In embodiments, a device in a network receives an indication of a connection between an endpoint node in the network and a conferencing service. The device retrieves network data associated with the indicated connection between the endpoint node and the conferencing service. The device uses a machine learning model to predict an experience metric for the endpoint node based on the network data associated with the indicated connection between the endpoint node and the conferencing service. The device causes the endpoint node to use a different connection to the conferencing service based on the predicted experience metric.

While there have been shown and described illustrative embodiments that provide for predicting a user experience metric, it is to be understood that various other adaptations and modifications may be made within the scope of the embodiments herein. For example, while certain embodiments are described herein with respect to using certain machine learning models, the models are not limited as such and may be used for other functions, in other embodiments. In addition, while certain protocols are shown, other suitable protocols may be used, accordingly.

The foregoing description has been directed to specific embodiments. It will be apparent, however, that other variations and modifications may be made to the described embodiments, with the attainment of some or all of their advantages. For instance, it is expressly contemplated that the components and/or elements described herein can be implemented as software being stored on a tangible (non-transitory) computer-readable medium (e.g., disks/CDs/RAM/EEPROM/etc.) having program instructions executing on a computer, hardware, firmware, or a combination thereof. Accordingly this description is to be taken only by way of example and not to otherwise limit the scope of the embodiments, which is limited by the scope of the appended claims.

## Claims

1. A method for an online conference comprising:
receiving (510) an indication of a connection between an endpoint node in the network and a conferencing service;
retrieving (515) network data associated with the indicated connection between the endpoint node and the conferencing service;
using (520) a machine learning model (248) to predict an experience metric for the endpoint node based on the retrieved network data associated with the indicated connection between the endpoint node and the conferencing service, wherein the machine learning model (248) is trained based on user ratings (312) provided by users on their experience of the conferencing service and on retrieved network data for the connections to the conferencing service that are associated with the user ratings (312) provided by the users of the conferencing service; and
causing (525) the endpoint node to use a different connection to the conferencing service if the predicted experience metric for the indicated connection predicts a low quality user experience.

2. The method as in claim 1, wherein causing (525) the endpoint node to select a different connection to the conferencing service comprises:
indicating the predicted experience metric to the endpoint node via an 802.11k or 802.11v type-length-value, TLV, wherein the endpoint node is configured to select the different connection to the conferencing service if the indicated predicted experience metric predicts a low quality user experience.

3. The method as in either claim 1 or claim 2, wherein retrieving (515) the network data associated with the indicated connection between the endpoint node and the conferencing service comprises at least one of:
sending a Simple Network Management Protocol, SNMP, message to a wireless access point associated with the connection between the endpoint node and the conferencing service, or
using an application program interface, API, to receive the network data from a wireless local area network, LAN, controller.

4. The method as in any preceding claim, wherein retrieving (515) the network data associated with the indicated connection between the endpoint node and the conferencing service comprises at least one of:
communicating with a network management system, or
communicating with a network management data analytics platform.

5. The method as in any preceding claim, wherein the method is carried out by a network device, for example a wireless access point or a wireless local area network, LAN, controller.

6. The method as in any preceding claim, wherein causing (525) the endpoint node to select a different connection to the conferencing service if the predicted experience metric for the indicated connection predicts a low quality user experience is performed via a cloud-based service offered by the device.

7. The method as in any preceding claim, wherein the network data associated with the indicated connection between the endpoint node and the conferencing service comprises: data from a wireless access point, data from a wireless local area network, LAN, controller, Dynamic Host Configuration Protocol, DHCP, data, Remote Authentication Dial-In User Service, RADIUS, data, data regarding the endpoint node, and data regarding a network path used by the indicated connection.

8. The method as in any preceding claim, wherein the machine learning model (248) comprises a regression model or a classifier model.

9. The method as in any preceding claim, wherein the user ratings provided by the users are received via the conferencing service.

10. An apparatus (200), comprising:
one or more network interfaces (210) to communicate with a network;
a processor (220) coupled to the network interfaces (210) and configured to execute one or more processes; and
a memory (240) configured to store a process executable by the processor (220), the process when executed operable to cause the processor (220) to perform all steps of a method according to any one of the preceding claims.

11. A computer program product, such as a tangible, non-transitory, computer-readable medium, storing program instructions that cause a device in a network, when executing the program instructions, to carry out all steps of the method of any one of claims 1 to 9.

## Patentansprüche

1. Verfahren für eine Online-Konferenz, das Folgendes umfasst:
Empfangen (510) eines Hinweises auf eine Verbindung zwischen einem Endpunktknoten im Netzwerk und einem Konferenzdienst;
Abrufen von (515) Netzwerkdaten, die der angegebenen Verbindung zwischen dem Endpunktknoten und dem Konferenzdienst zugeordnet sind;
Verwenden (520) eines maschinellen Lernmodells (248) zum Vorhersagen einer Erfahrungsmetrik für den Endpunktknoten basierend auf den abgerufenen Netzwerkdaten, die mit der angegebenen Verbindung zwischen dem Endpunktknoten und dem Konferenzdienst verbunden sind, wobei das maschinelle Lernmodell (248) basierend auf Folgendem trainiert wird: Benutzerbewertungen (312), die von Benutzern bereitgestellt werden, ihrer Erfahrung mit dem Konferenzdienst und abgerufenen Netzwerkdaten für die Verbindungen zum Konferenzdienst, die den Benutzerbewertungen (312) zugeordnet sind, die von den Benutzern des Konferenzdienstes bereitgestellt werden; und
Bewirken (525), dass der Endpunktknoten Folgendes ausführt: Verwenden einer anderen Verbindung zum Konferenzdienst, wenn die vorhergesagte Erfahrungsmetrik für die angegebene Verbindung eine Benutzererfahrung von geringer Qualität vorhersagt.

2. Verfahren nach Anspruch 1, wobei das Bewirken (525) des Endpunktknotens, eine andere Verbindung zu dem Konferenzdienst auszuwählen, Folgendes umfasst:
Angeben der vorhergesagten Erfahrungsmetrik für den Endpunktknoten über einen 802.1 lk- oder 802.11 v-Typ-Längenwert (Type-Length-Value, TLV), wobei der Endpunktknoten dafür konfiguriert ist, die unterschiedliche Verbindung zum Konferenzdienst auszuwählen, wenn die angegebene Metrik für die vorhergesagte Erfahrung eine Benutzererfahrung von geringer Qualität vorhersagt.

3. Verfahren nach Anspruch 1 oder Anspruch 2, wobei das Abrufen (515) der Netzwerkdaten, die der angegebenen Verbindung zwischen dem Endpunktknoten und dem Konferenzdienst zugeordnet sind, Folgendes umfasst:
Senden einer einfachen Netzwerkverwaltungsprotokoll-(Simple Network Management Protocol, SNMP) Nachricht an einen drahtlosen Zugriffspunkt, der der Verbindung zwischen dem Endpunktknoten und dem Konferenzdienst zugeordnet ist, und/oder
Verwenden einer Anwendungsprogrammschnittstelle (Application Program Interface, API) zum Empfangen der Netzwerkdaten von einer drahtlosen lokalen Netzwerk- (Local Area Network, LAN) Steuerung.

4. Verfahren nach einem der vorhergehenden Ansprüche, wobei das Abrufen (515) der Netzwerkdaten, die der angegebenen Verbindung zwischen dem Endpunktknoten und dem Konferenzdienst zugeordnet sind, Folgendes umfasst:
Kommunizieren mit einem Netzwerkverwaltungssystem und/oder
Kommunizieren mit einer Netzwerkverwaltungsdaten-Analyseplattform.

5. Verfahren nach einem der vorhergehenden Ansprüche, wobei das Verfahren von einer Netzwerkvorrichtung ausgeführt wird, beispielsweise einem drahtlosen Zugangspunkt oder einer drahtlosen lokalen Netzwerk-, LAN-, Steuerung.

6. Verfahren nach einem der vorhergehenden Ansprüche, wobei das Veranlassen (525) des Endpunktknotens, eine andere Verbindung zum Konferenzdienst auszuwählen, wenn die vorhergesagte Erfahrungsmetrik für die angegebene Verbindung eine Benutzererfahrung von geringer Qualität vorhersagt, über einen Cloud-basierten Dienst durchgeführt wird, der von der Vorrichtung angeboten wird.

7. Verfahren nach einem der vorhergehenden Ansprüche, wobei die Netzwerkdaten, die der angegebenen Verbindung zwischen dem Endpunktknoten und dem Konferenzdienst zugeordnet sind, Folgendes umfassen: Daten von einem drahtlosen Zugangspunkt, Daten von einer drahtlosen lokalen Netzwerk-, LAN, Steuerung, dynamische Host-Konfigurationsprotokoll- (Dynamic Host Configuration Protocol, DHCP) Daten, Fernauthentifizierungs-Einwahlbenutzerdienst (Remote Authentication Dial-In User Service, RADIUS) Daten, Daten bezüglich des Endpunktknotens und Daten bezüglich eines Netzwerkpfads, der von der angegebenen Verbindung verwendet wird.

8. Verfahren nach einem der vorhergehenden Ansprüche, wobei das maschinelle Lernmodell (248) ein Regressionsmodell oder ein Klassifikatormodell umfasst.

9. Verfahren nach einem der vorhergehenden Ansprüche, wobei die von den Benutzern bereitgestellten Benutzerbewertungen über den Konferenzdienst empfangen werden.

10. Vorrichtung (200), die Folgendes umfasst:
eine oder mehrere Netzwerkschnittstellen (210) zur Kommunikation mit einem Netzwerk;
einen Prozessor (220), der mit den Netzwerkschnittstellen (210) gekoppelt und dafür konfiguriert ist, einen oder mehrere Prozesse auszuführen; und
einen Speicher (240), der dafür konfiguriert ist, einen vom Prozessor (220) ausführbaren Prozess zu speichern, wobei der Prozess, wenn er ausgeführt wird, dafür ausgelegt ist, den Prozessor (220) zu veranlassen, alle Schritte eines Verfahrens nach einem der vorhergehenden Ansprüche auszuführen.

11. Computerprogrammprodukt, wie beispielsweise ein materielles, nicht-flüchtiges, computerlesbares Medium, das Programmanweisungen speichert, die eine Vorrichtung in einem Netzwerk veranlassen, bei der Ausführung der Programmanweisungen alle Schritte des Verfahrens nach einem der Ansprüche 1 bis 9 auszuführen.

## Revendications

1. Procédé pour une conférence en ligne, consistant à :
recevoir (510) une indication d'une connexion entre un nœud d'extrémité dans le réseau et un service de conférence ;
récupérer (515) des données de réseau associées à la connexion indiquée entre le nœud d'extrémité et le service de conférence ;
utiliser (520) un modèle d'apprentissage machine (248) pour prédire un indicateur métrique d'expérience pour le nœud d'extrémité sur la base des données de réseau récupérées associées à la connexion indiquée entre le nœud d'extrémité et le service de conférence,
le modèle d'apprentissage machine (248) étant entraîné sur la base de notes d'utilisateur (312) fournies par des utilisateurs à propos de leur expérience du service de conférence et de données de réseau récupérées pour les connexions au service de conférence qui sont associées aux notes d'utilisateur (312) fournies par les utilisateurs du service de conférence ; et
amener (525) le nœud d'extrémité à : utiliser une connexion différente au service de conférence si l'indicateur métrique d'expérience prédit pour la connexion indiquée prédit une expérience d'utilisateur de faible qualité.

2. Procédé selon la revendication 1, dans lequel le fait d'amener (525) le nœud d'extrémité à sélectionner une connexion différente au service de conférence consiste à :
indiquer l'indicateur métrique d'expérience prédit au nœud d'extrémité par l'intermédiaire d'un objet Type-Longueur-Valeur (TLV) 802.11k ou 802.11v, le nœud d'extrémité étant configuré pour sélectionner la connexion différente au service de conférence si l'indicateur métrique d'expérience prédit indiqué prédit une expérience d'utilisateur de faible qualité.

3. Procédé selon la revendication 1 ou 2, dans lequel la récupération (515) des données de réseau associées à la connexion indiquée entre le nœud d'extrémité et le service de conférence consiste à :
envoyer un message sur protocole simple de gestion de réseau (SNMP) à un point d'accès sans fil associé à la connexion entre le nœud d'extrémité et le service de conférence, et/ou
utiliser une interface de programme d'application (API) pour recevoir les données de réseau en provenance d'un contrôleur de réseau local (LAN) sans fil.

4. Procédé selon l'une quelconque des revendications précédentes, dans lequel la récupération (515) des données de réseau associées à la connexion indiquée entre le nœud d'extrémité et le service de conférence consiste à :
communiquer avec un système de gestion de réseau,
et/ou
communiquer avec une plateforme analytique de données de gestion de réseau.

5. Procédé selon l'une quelconque des revendications précédentes, le procédé étant réalisé par un dispositif de réseau, par exemple un point d'accès sans fil ou un contrôleur de réseau local (LAN) sans fil.

6. Procédé selon l'une quelconque des revendications précédentes, dans lequel le fait d'amener (525) le nœud d'extrémité à sélectionner une connexion différente au service de conférence si l'indicateur métrique d'expérience prédit pour la connexion indiquée prédit une expérience d'utilisateur de faible qualité est réalisé par l'intermédiaire d'un service en nuage offert par le dispositif.

7. Procédé selon l'une quelconque des revendications précédentes, dans lequel les données de réseau associées à la connexion indiquée entre le nœud d'extrémité et le service de conférence comprennent : des données en provenance d'un point d'accès sans fil, des données en provenance d'un contrôleur de réseau local (LAN) sans fil, des données sur protocole de configuration dynamique d'hôte (DHCP), des données de service d'utilisateur commuté à authentification distante (RADIUS), des données concernant le nœud d'extrémité et des données concernant un chemin de réseau utilisé par la connexion indiquée.

8. Procédé selon l'une quelconque des revendications précédentes, dans lequel le modèle d'apprentissage machine (248) comprend un modèle de régression ou un modèle classificateur.

9. Procédé selon l'une quelconque des revendications précédentes, dans lequel les notes d'utilisateur fournies par les utilisateurs sont reçues par l'intermédiaire du service de conférence.

10. Appareil (200), comprenant :
une ou plusieurs interfaces de réseau (210) permettant de communiquer avec un réseau ;
un processeur (220) couplé aux interfaces de réseau (210) et configuré pour exécuter un ou plusieurs processus ; et
une mémoire (240), configurée pour stocker un processus exécutable par le processeur (220), le processus, lorsqu'il est exécuté, permettant d'amener le processeur (220) à réaliser toutes les étapes d'un procédé selon l'une quelconque des revendications précédentes.

11. Produit de programme informatique, tel qu'un support tangible, non temporaire et lisible par ordinateurs, stockant des instructions de programme qui amènent un dispositif dans un réseau, lorsqu'il exécute les instructions de programme, à réaliser toutes les étapes du procédé selon l'une quelconque des revendications 1 à 9.
